Europäisches Patentamt

European Patent Office

Office européen des brevets

(19)

(11) **EP 0 622 593 B1**

(12) **FASCICULE DE BREVET EUROPEEN**

(45) Date de publication et mention
de la délivrance du brevet:
**29.07.1998 Bulletin 1998/31**

(51) Int Cl.6: **F25B 17/08**, F25B 35/04,
F25B 29/00

(21) Numéro de dépôt: **94400885.3**

(22) Date de dépôt: **25.04.1994**

(54) **Dispositif de réfrigération et de chauffage utilisant un sorbant solide**

Ein festes Sorptionsmittel verwendende Kühl- und Heizvorrichtung

Cooling and heating device using a solid sorbent

(84) Etats contractants désignés:
**AT BE CH DE DK ES FR GB GR IE IT LI LU NL PT SE**

(30) Priorité: **27.04.1993 FR 9304952**

(43) Date de publication de la demande:
**02.11.1994 Bulletin 1994/44**

(73) Titulaire: **SOCIETE NATIONALE ELF AQUITAINE**
**92078 Paris la Défense (FR)**

(72) Inventeur: **Meunier, Francis**
**F-75006 Paris (FR)**

(74) Mandataire: **Dubois-Chabert, Guy et al**
**c/o BREVATOME**
**25, rue de Ponthieu**
**75008 Paris (FR)**

(56) Documents cités:
WO-A-92/22776          DE-A- 3 509 564
US-A- 2 253 907        US-A- 4 183 227
US-A- 4 478 057        US-A- 4 637 218
US-A- 4 694 659        US-A- 5 046 319

## Description

La présente invention concerne un dispositif de réfrigération et de chauffage utilisant un sorbant solide.

L'invention concerne ainsi les pompes à chaleur et les réfrigérateurs qui utilisent, pour leur fonctionnement, des lits fixes de solides interagissant avec un fluide, un gaz ou un mélange de gaz par exemple.

Les solides adsorbent ou désorbent le gaz à la suite d'une variation de la température de ces solides.

On connaît déjà des dispositifs de réfrigération et de chauffage utilisant des cycles intermittents à un adsorbeur.

Ces dispositifs connus présentent deux inconvénients :

- ils ont un faible rendement (essentiellement dû aux chaleurs sensibles mises en jeu lors des larges variations de température de l'adsorbeur), le coefficient de performance (COP) relatif à la production de froid étant inférieur à 0,5,
- ils produisent du froid (ou de la chaleur) de façon discontinue.

Pour remédier à ces deux inconvénients, des dispositifs utilisant des cycles de régénération à pluralité d'adsorbeurs ont été réalisés.

L'idée de base de ces dispositifs est d'utiliser la chaleur sensible ainsi que la chaleur latente d'adsorption qui sont dégagées par un adsorbeur au cours de son refroidissement et pendant l'adsorption pour préchauffer un autre adsorbeur en cours de chauffage et de désorption.

La récupération de chaleur interne sur un adsorbeur pour préchauffer l'autre adsorbeur entraîne une économie de chaleur prélevée à la source chaude du dispositif et entraîne de ce fait une amélioration du rendement du dispositif.

Pour ce faire, on a utilisé jusqu'à présent deux types de régénération, correspondant à deux types de "gestion" de la chaleur dans les adsorbeurs.

Dans un premier type, on utilise des adsorbeurs à température uniforme.

Un fluide caloporteur circule dans un échangeur de chaleur placé dans chacun des adsorbeurs, et cet échangeur ainsi que les conditions opératoires sont prévus pour que des gradients de température les plus faibles possibles existent au sein de chaque adsorbeur et entre le lit d'adsorbant solide correspondant et le fluide caloporteur.

Dans la mise en oeuvre du dispositif correspondant est prévue une phase de récupération de chaleur au cours de laquelle le fluide caloporteur circule entre les deux adsorbeurs, l'un de ceux-ci étant initialement à haute température tandis que l'autre est initialement à basse température.

Au cours de cette phase, aucune chaleur n'est prélevée à une source extérieure de chaleur.

Cette phase est interrompue lorsque les deux adsorbeurs sont à la même température.

Pour plus de détails, on se reportera aux documents (1) à (3) qui, comme les autres documents cités par la suite, sont mentionnés à la fin de la présente description.

On a également proposé d'utiliser plus de deux adsorbeurs (voir notamment le document (3)) pour la "gestion" de la chaleur.

Avec de tels dispositifs, des résultats expérimentaux très intéressants ont été obtenus : un COP de production de froid de 1,06 a été obtenu avec un cycle à trois absorbeurs.

Un deuxième type de gestion consiste à créer de forts gradients axiaux de température au sein des adsorbeurs.

Il est alors théoriquement possible de refroidir un adsorbeur par un fluide caloporteur froid et d'obtenir un fluide caloporteur chaud à la sortie de cet adsorbeur grâce aux forts gradients axiaux de température au sein de cet adsorbeur.

Ce fluide chaud est alors utilisé pour la régénération d'un deuxième adsorbeur.

Cette technique est expliquée en détails dans les documents (4) et (5) auxquels on se reportera.

Cette technique utilise en fait deux adsorbeurs qui sont montés en série et deux échangeurs de chaleur (servant l'un de source chaude et l'autre de source froide) qui sont intercalés entre ces deux adsorbeurs, et le sens d'écoulement du fluide caloporteur est inversé à la fin d'un demi-cycle de fonctionnement.

Une telle façon de procéder est décrite en détails dans le document (6) que l'on consultera.

Il a été démontré théoriquement que, si des fronts raides de température sont obtenus, la régénération peut être très efficace et que des COP de production de froid supérieurs à 1, voire supérieurs ou égaux à 2, pourraient être obtenus.

On a même proposé des cycles de régénération utilisant des fronts de température dans quatre réacteurs, ce qui permettrait d'obtenir des COP supérieurs à 2 (voir le document (7)).

Cependant, jusqu'à présent, toutes les tentatives expérimentales avec ce procédé à front de chaleur, n'ont conduit qu'à des résultats très décevants puisque le COP de production de froid le plus élevé qui ait été obtenu est seulement égal à 0,75 (voir le document (8)), ce qui est inférieur aux résultats obtenus avec des cycles utilisant trois adsorbeurs à température uniforme.

La raison essentielle de ces faibles résultats tient à la difficulté d'obtenir la propagation de fronts raides de température.

Cette difficulté résulte principalement des matériaux utilisés en tant qu'adsorbants : il s'agit de lits fixes granulaires d'adsorbants qui présentent de faibles caractéristiques de transfert thermique, à savoir des conductivités thermiques de l'ordre de 0,1 à 0,3 $W.m^{-1}.°C^{-1}$ pour ces adsorbants et des coefficients d'échange à la paroi qui sont inférieurs à 200 W.m$^{-2}$.°C$^{-1}$, de telles conditions étant très défavorables pour l'obtention de fronts raides de température.

La présente invention a pour but de remédier aux inconvénients précédents et propose un dispositif de réfrigération et de chauffage permettant d'obtenir des COP plus élevés.

US-A-4 694 659 décrit un dispositif de réfrigération et de chauffage comprenant deux adsorbeurs montés en série et deux échangeurs de chaleur intercalés entre ces deux adsorbeurs. Le sens d'écoulement du fluide caloporteur est inversé à la fin d'un demi-cycle de fonctionnement.

US-A-5 046 319 décrit une pompe à chaleur comprenant une série d'au moins quatre compresseurs contenant un adsorbant. Une grande quantité de chaleur est transférée d'un compresseur au suivant de sorte que la chaleur est régénérée.

De façon précise, la présente invention a pour objet un dispositif de réfrigération et de chauffage conforme à la revendication 1.

Par "sorbant" on entend un solide susceptible de fixer un fluide soit par adsorption soit par réaction chimique.

L'utilisation, dans le dispositif objet de la présente invention, à titre de sorbant, du matériau composite qui présente une anisotropie de conductivité thermique permet de créer un front raide de température.

De plus, l'anisotropie de perméabilité de ce matériau ainsi que l'existence des compartiments dans le dispositif permettent d'obtenir un front raide de pression ainsi qu'un coefficient de régénération élevé et donc un COP élevé.

Selon un premier mode de réalisation particulier du dispositif objet de l'invention, les moyens de circulation du fluide réfrigérant comprennent :

- au moins une canalisation qui relie le condenseur à l'évaporateur,
- des conduits qui relient respectivement les compartiments à cette canalisation, et
- des moyens d'obturation escamotables de la canalisation, qui sont aptes à déplacer ledit front de pression dans le réacteur, d'un compartiment à l'autre.

Selon un deuxième mode de réalisation particulier, les moyens de circulation du fluide réfrigérant comprennent :

- au moins une première canalisation qui fait communiquer le réacteur avec le condenseur,
- un premier ensemble de conduits qui relient respectivement les compartiments à cette première canalisation,
- au moins une deuxième canalisation qui fait communiquer le réacteur avec l'évaporateur,
- un deuxième ensemble de conduits qui relient respectivement les compartiments à cette deuxième canalisation, et

- des moyens d'obturation escamotables des première et deuxième canalisations et des premier et deuxième ensembles de conduits, qui sont aptes à déplacer ledit front de pression dans le réacteur, d'un compartiment à l'autre.

Les moyens d'obturation peuvent comprendre des vannes.

En variante, ces moyens d'obturation comprennent des clapets anti-retour, ce qui simplifie la réalisation du dispositif objet de l'invention.

Dans la présente invention, on peut utiliser un seul réacteur pour y réaliser le cycle de régénération.

Comme on le verra mieux par la suite, on peut utiliser une pluralité de réacteurs pour y créer le cycle de régénération.

Selon un mode de réalisation particulier, le dispositif objet de l'invention comprend deux réacteurs et les moyens de circulation de fluide caloporteur sont prévus pour faire circuler un fluide caloporteur dans chaque réacteur, à partir de la source chaude vers la source froide de l'un de ces réacteurs et, simultanément, à partir de la source froide vers la source chaude de l'autre réacteur.

Dans ce cas, le dispositif comprend avantageusement une seule source chaude, une seule source froide et un seul fluide caloporteur, qui sont communs aux deux réacteurs, ce qui simplifie la réalisation du dispositif.

Dans ce cas également, le dispositif peut avantageusement comprendre un seul condenseur, un seul évaporateur et un seul fluide réfrigérant, qui sont communs aux deux réacteurs, ce qui simplifie aussi la réalisation du dispositif.

Les compartiments peuvent être séparés les uns des autres par des cloisons assurant une certaine étanchéité et faites dudit matériau.

La présente invention sera mieux comprise à la lecture de la description d'exemples de réalisation donnés ci-après, à titre purement indicatif et nullement limitatif, en faisant référence aux dessins annexés sur lesquels :

- la figure 1 est une vue schématique d'un dispositif conforme à l'invention, qui comprend deux canalisations respectivement reliées au condenseur et à l'évaporateur du dispositif,
- la figure 2 est un diagramme montrant les variations du logarithme népérien de la pression dans le réacteur que comporte le dispositif, en fonction de la température du sorbant solide contenu dans ce réacteur, au cours du cycle de fonctionnement du dispositif,
- la figure 3 est une vue schématique d'un autre dispositif conforme à l'invention, qui comporte une seule canalisation reliée d'une part au condenseur et d'autre part à l'évaporateur de ce dispositif,
- la figure 4 est une vue schématique d'un autre dispositif conforme à l'invention, qui comprend deux réacteurs ainsi qu'un condenseur et un évaporateur qui sont commun à ces deux réacteurs,

- la figure 5 est une vue schématique d'un autre dispositif conforme à l'invention, qui comprend deux réacteurs ainsi qu'une source chaude et une source froide qui sont communes à ces deux réacteurs, et

- la figure 6 est une vue schématique et partielle d'un autre dispositif conforme à l'invention, qui comprend deux réacteurs ainsi qu'un condenseur et un évaporateur qui sont communs à ces deux réacteurs et qui sont reliés à ces derniers d'une manière comparable à la liaison entre le condensateur, l'évaporateur et le réacteur illustrés par la figure 3.

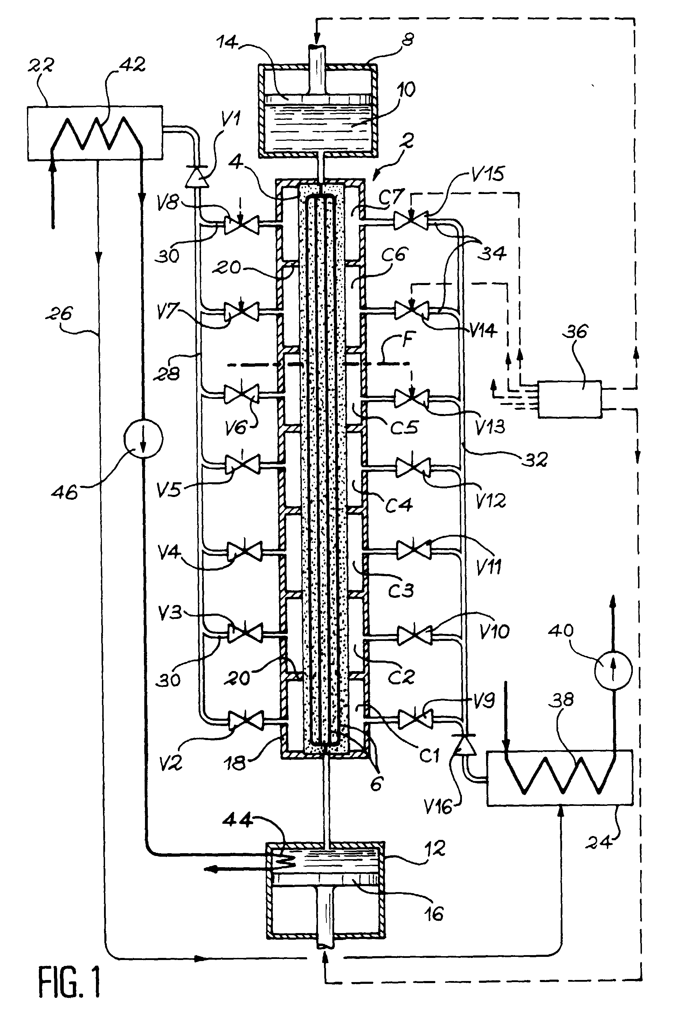

Le dispositif de réfrigération et de chauffage conforme à l'invention, qui est schématiquement représenté sur la figure 1, comprend :

- un réacteur 2 qui contient un sorbant solide 4 capable de fixer un fluide réfrigérant et entourant un échangeur de chaleur 6,

- une source chaude 8 destinée à chauffer un fluide caloporteur 10, et

- une source froide 12 destinée à refroidir ce fluide caloporteur.

Le réacteur 2 comporte une pluralité de compartiments, qui sont au nombre de sept dans l'exemple représenté sur la figure 1 et qui portent les références C1, C2, ..., C7.

Ces compartiments C1 à C7 sont séparés de façon étanche les uns des autres et contiennent chacun une partie du sorbant solide.

Le dispositif représenté sur la figure 1 comprend en outre :

- des moyens de circulation alternative du fluide caloporteur 10 entre la source chaude 8 et la source froide 12, par l'intermédiaire de l'échangeur de chaleur 6, pour créer dans le sorbant solide 4 un front de température F qui parcourt successivement les compartiments, du premier compartiment C1 au dernier compartiment C7 et inversement.

Dans l'exemple représenté sur la figure 1, ces moyens de circulation alternative comprennent un premier piston 14 placé dans la source chaude 8 et un deuxième piston 16 placé dans la source froide 12.

Le piston 14 est apte à pousser le fluide caloporteur de la source chaude vers l'échangeur de chaleur 6 tandis que le piston 16 est apte à pousser ce fluide caloporteur de la source froide 12 vers cet échangeur de chaleur.

Le réacteur 2 est constitué par une colonne dans laquelle est placée un bloc cylindrique de sorbant solide dont le diamètre est inférieur au diamètre intérieur de la virole 18 de la colonne.

L'espace ainsi ménagé entre le bloc de sorbant solide et cette virole permet l'écoulement de la vapeur du fluide réfrigérant.

Dans l'exemple représenté sur la figure 1, l'échangeur de chaleur dont est muni le bloc de sorbant solide est un échangeur à tubes et calandre, le fluide caloporteur circulant à l'intérieur de ces tubes.

En variante, on peut utiliser un échangeur à plaques parallèles entourées par le sorbant solide.

Ce sorbant solide 4 est un matériau composite à forte conductivité thermique perpendiculairement à l'axe de la colonne (direction du déplacement du fluide caloporteur dans l'échangeur de chaleur), par exemple entre 1 et 100 $W.m^{-1}.°C^{-1}$, et à faible conductivité thermique parallèlement à ce déplacement du fluide caloporteur, par exemple entre 0,1 et 2 $W.m^{-1}.°C^{-1}$, et présentant un coefficient d'anisotropie thermique défini comme le rapport de la conductivité thermique perpendiculaire à l'axe du déplacement sur la conductivité thermique parallèle à l'axe, égal ou supérieur à 3 et de préférence égal ou supérieur à 5.

De plus, ce matériau a une forte perméabilité perpendiculairement à ce déplacement, par exemple entre $10^{-8}$ et $10^{-12}$ $m^2$, et une faible perméabilité, par exemple entre $10^{-16}$ et $10^{-12}$ $m^2$, parallèlement à ce déplacement du fluide caloporteur dans l'échangeur de chaleur, et présente un coefficient d'anisotropie de perméabilité défini comme le rapport de la perméabilité perpendiculaire à l'axe du déplacement sur la perméabilité parallèle à cet axe, égal ou supérieur à 3 et de préférence égal ou supérieur à 5.

En outre, ce matériau composite possède un fort coefficient d'échange à la paroi des tubes (ou des plaques) de l'échangeur, par exemple entre 200 et 20000 $W.m^{-2}.°C^{-1}$.

Ceci, en liaison avec l'anisotropie de conductivité thermique, permet de créer un front raide de température dans le réacteur.

L'anisotropie de la perméabilité du matériau permet d'obtenir un coefficient de régénération élevé et donc un COP élevé.

Des exemples d'un tel matériau sont donnés dans le document (9) auquel on se reportera.

Ce matériau peut comporter un adsorbant solide tel que de la zéolithe, du gel de silice, de l'alumine activée ou du charbon actif, auquel cas on peut utiliser, en tant que fluide réfrigérant, de l'eau ou de l'ammoniac ou encore de l'alcool.

En variante, le matériau peut comporter un sel à réaction chimique au lieu d'un adsorbant, par exemple du chlorure de calcium, auquel cas on peut utiliser l'ammoniac en tant que fluide réfrigérant.

Le choix du meilleur sorbant solide s'effectue à partir des données thermodynamiques des couples solide-fluide réfrigérant et du domaine de température opératoires visées.

L'espace compris entre le bloc de sorbant solide et la virole de la colonne comporte un ensemble de cloisons étanches 20 qui permettent l'isolation des compartiments C1 à C7 les uns par rapport aux autres.

Ces cloisons peuvent être faites du matériau composite lui-même.

En effet, il est possible de fabriquer des rondelles ou des disques de ce matériau composite qui soient fortement anisotropes du point de vue de la perméabilité, pour avoir une très faible perméabilité axiale c'est-à-dire une très faible perméabilité parallèlement au déplacement du fluide caloporteur dans l'échangeur.

Le dispositif schématiquement représenté sur la figure 1 comprend également :

- un condenseur 22 destiné à condenser le fluide réfrigérant libéré par le matériau lorsque celui-ci est chauffé grâce au fluide caloporteur,
- un évaporateur 24 à plus basse pression que celle du condenseur, destiné à vaporiser le fluide réfrigérant pour que celui-ci se fixe au matériau lorsque celui-ci est refroidi grâce au fluide caloporteur,
- un moyen de retour du fluide réfrigérant en phase liquide, du condenseur vers l'évaporateur, ce moyen étant, dans l'exemple représenté sur la figure 1, un tube capillaire 26 qui relie le condenseur à l'évaporateur et dont le diamètre intérieur est suffisamment grand pour que le fluide réfrigérant puisse y circuler en phase liquide, mais suffisamment faible pour que le débit de fluide réfrigérant en phase gazeuse y soit négligeable.

Le dispositif de la figure 1 comprend aussi des moyens de circulation du fluide réfrigérant en phase gazeuse, de l'évaporateur au réacteur puis de ce dernier au condenseur, ces moyens de circulation du fluide réfrigérant étant aptes à créer, dans le réacteur 2, une zone de haute pression et une zone de basse pression qui sont séparées par un front de pression qui parcourt successivement les compartiments avec le front de température F.

Dans l'exemple représenté sur la figure 1, ces moyens de circulation du fluide réfrigérant comprennent :

- une première canalisation 28 qui communique avec le condenseur 22,
- un premier ensemble de conduits 30 qui relient respectivement les compartiments C1 à C7 à cette première canalisation 28,
- une deuxième canalisation 32 qui communique avec l'évaporateur 24,
- un deuxième ensemble de conduits 34 qui relient respectivement les compartiments C1 à C7 à cette deuxième canalisation 32, et
- des moyens d'obturation escamotables des première et deuxième canalisations et des premier et deuxième ensembles de conduits, moyens d'obturation qui sont aptes à déplacer ledit front de pression dans le réacteur 2, d'un compartiment à l'autre.

Dans l'exemple représenté, il y a seize moyens d'obturation référencés V1 à V16.

Le moyen d'obturation V1 est monté à l'entrée du condenseur 22, le moyen d'obturation V16 est monté à la sortie de l'évaporateur 24, les moyens d'obturation V2 à V8 sont montés sur les conduits 30 correspondant respectivement aux compartiments C1 à C7, et les moyens d'obturation V9 à V15 sont montés sur les conduits 34 correspondant respectivement aux compartiments C1 à C7, comme on le voit sur la figure 1.

Dans l'exemple représenté sur la figure 1, les moyens d'obturation V2 à V15 sont des vannes, le moyen d'obturation V1 est un clapet anti-retour permettant la circulation du fluide réfrigérant seulement du réacteur vers le condenseur et le moyen d'obturation V16 est un clapet anti-retour permettant seulement la circulation du fluide réfrigérant de l'évaporateur vers le réacteur.

La canalisation 28 est une canalisation à haute pression tandis que la canalisation 32 est une canalisation à basse pression.

Le dispositif représenté sur la figure 1 comprend également des moyens 36 de commande des pistons 14 et 16 et des vannes V2 à V15.

On voit également sur la figure 1 un échangeur de chaleur 38 qui est monté dans l'évaporateur 24 et dans lequel on fait circuler un fluide grâce à une pompe 40 pour que ce fluide soit refroidi à sa sortie de l'échangeur 38.

On voit également un autre échangeur de chaleur 42 qui est monté dans le condenseur 22 ainsi qu'un échangeur de chaleur 44 qui est monté dans un volume mort de la source froide.

Une pompe 46 permet de faire circuler un fluide dans l'échangeur 42 puis dans cet échangeur 44, ce fluide étant successivement chauffé dans l'échangeur 42 puis dans l'échangeur 44.

Les échangeurs de chaleur 38, 42 et 44 à circulation de fluide pourraient être remplacés par des ailettes permettant de chauffer (ou de refroidir) de l'air et dans ce cas les pompes 40 et 46 ne seraient bien entendu pas utilisées.

On précise que la source chaude 8 est par exemple une chaudière à gaz, à fioul ou électrique.

Pendant le fonctionnement du dispositif, la masse de fluide caloporteur évolue entre la source chaude et la source froide et échange de la chaleur dans d'excellentes conditions avec le matériau composite grâce aux remarquables propriétés de transfert thermique de ce matériau perpendiculairement au déplacement du fluide caloporteur.

On va décrire ci-après le fonctionnement du dispositif.

On prend l'exemple d'un matériau composite contenant un adsorbant tel qu'une zéolithe associée à l'eau en tant que fluide réfrigérant.

Un cycle de régénération se décompose en deux demi-cycles.

Pour décrire ce cycle, considérons la fin de cette régénération, lorsque le réservoir de fluide caloporteur à basse température (source froide) est rempli.

Le front de haute température est voisin de l'extrémité de la colonne la plus proche de la source froide, cette colonne étant chaude sauf en cette extrémité qui est encore fraîche.

Auparavant, le fluide caloporteur circulait depuis la source chaude vers la source froide et on s'apprête maintenant à inverser le sens de circulation de ce fluide caloporteur.

On précise que, dans la première partie du cycle, le fluide caloporteur passe de la source froide à la source chaude à travers l'échangeur de chaleur 6 et, pour ce faire, les moyens de commande 36 activent le piston 16 pour qu'il pousse le fluide caloporteur hors de cette source froide tandis que le piston 14 est libre et se déplace dans la source chaude pendant que le fluide caloporteur remplit celle-ci.

Dans la deuxième partie du cycle, les moyens de commande 36 activent le piston 14 pour qu'il pousse le fluide caloporteur de la source chaude vers l'échangeur de chaleur 6, tandis que le piston 16 est libre et se déplace dans la source froide pendant que le fluide caloporteur remplit celle-ci.

On revient maintenant au fonctionnement du dispositif, au moment où l'on s'apprête à inverser le sens du fluide caloporteur (qui remplit la source froide).

A ce moment, le réacteur est en communication via le fluide réfrigérant, par l'intermédiaire de tous ses compartiments, avec le condenseur 22 (les vannes V2 à V8 sont ouvertes et les vannes V9 à V15 sont fermées).

On isole alors le compartiment C1 du condenseur 22 en fermant la vanne V2 et on commence à refroidir la colonne par circulation du fluide caloporteur depuis la source froide 12.

Le début de la colonne se refroidit et la pression baisse dans le compartiment C1.

Dès que cette pression atteint la valeur de la pression souhaitée d'évaporation, on relie le compartiment C1 à l'évaporateur 24 en ouvrant la vanne V9 et l'on isole le compartiment C2 en fermant la vanne V3.

Ensuite, on ouvre la vanne V10 et on ferme la vanne V4, ce qui a pour effet d'isoler le compartiment C3 et de mettre le compartiment C2 en communication avec l'évaporateur 24, et ainsi de suite....

Les vannes V9 à V13 étant ouvertes et les vannes V2 à V7 étant fermées, on ouvre la vanne V14 et on ferme la vanne V8.

Pour terminer, on ouvre la vanne V15.

A ce moment, toutes les vannes de communication vers l'évaporateur sont ouvertes, alors que toutes les vannes de communication vers le condenseur sont fermées et l'on peut aborder un autre demi-cycle au cours duquel on va inverser le sens de circulation du fluide caloporteur.

Pendant tout ce temps, le fluide caloporteur chaud, qui se trouvait dans la colonne, évolue vers la sortie de cette colonne (extrémité la plus proche de la source chaude).

Le transport de ce fluide chaud permet qu'une faible désorption continue dans une partie de la colonne bien qu'une autre partie de la colonne soit en adsorption.

Cette faible désorption est due au fait que le flux de condensation diminue, ce qui entraîne une baisse de pression dans la canalisation de liaison vers le condenseur.

Cet effet de condensation à température constante mais à pression variable au cours des cycles à adsorption est bien connu de l'homme du métier (on se reportera par exemple au document (10)).

Dès qu'un compartiment communique avec l'évaporateur (par ouverture d'une vanne de communication), l'adsorption se produit dans ce compartiment et la chaleur dégagée par l'adsorption élève la température de l'adsorbant jusqu'à une valeur maximale de la température égale à la température de seuil Ts'.

Grâce aux bonnes propriétés de transfert thermique du réacteur, la température du fluide caloporteur est également élevée jusqu'à une température proche de Ts'.

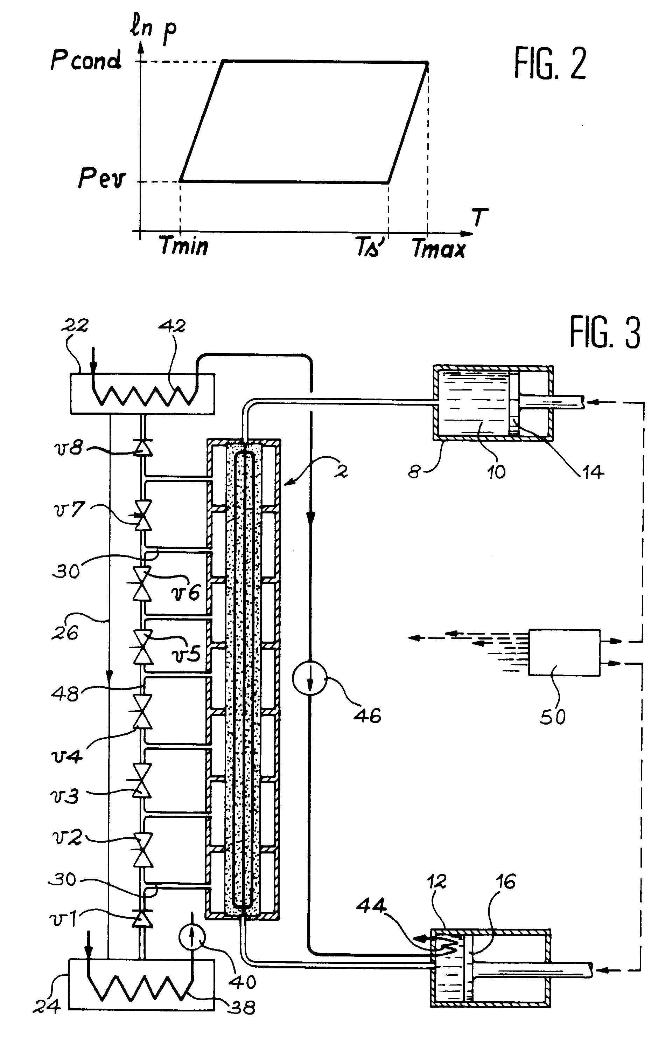

Cette température apparaît sur la figure 2 qui montre les variations du logarithme népérien de la pression p dans le réacteur, en fonction de la température T de l'adsorbant au cours du cycle.

La pression dans le condenseur est notée Pcond et la pression dans l'évaporateur est notée Pev.

Tmin et Tmax représentent respectivement la température minimale et la température maximale du fluide caloporteur.

Ts' est la température maximale à laquelle peut être porté l'adsorbant pendant l'adsorption.

Cette commande d'ouverture et de fermeture successives des vannes provoque une évolution simultanée des fronts de température et de pression.

Ceci a une conséquence très importante pour le rendement du procédé.

En effet, l'homme du métier sait que dans les divers procédés à régénération connus, dans la phase de refroidissement du réacteur, une courte phase de décompression adiabatique de la colonne se produit au début du refroidissement.

Au cours de cette phase, l'adsorbant placé à l'extrémité chaude de la colonne désorbe une certaine quantité de fluide réfrigérant, ce qui a pour effet de refroidir l'adsorbant.

L'existence des cloisons associée à l'anisotropie de la perméabilité permet, dans un dispositif conforme à la présente invention, d'éviter cet abaissement de la température à l'extrémité de la colonne dans la phase de refroidissement de l'adsorbant.

De plus, afin d'éviter un possible transfert en retour de vapeur depuis le condenseur vers le réacteur, on a prévu le clapet anti-retour V1 qui empêche que le condenseur ne devienne un évaporateur.

Après fermeture de ce clapet V1, la pression dans tous les compartiments, qui ne sont pas encore en communication avec l'évaporateur, baisse au fur et à mesure que la température baisse et la communication de ces différents compartiments avec l'évaporateur est commandée comme on l'a décrit plus haut.

En conséquence, avec le dispositif de la figure 1, commandé comme on l'a indiqué, la température de sortie du fluide caloporteur, en phase de refroidissement du réacteur, est toujours supérieure à ce qu'elle est avec les dispositifs connus.

Ainsi la régénération et donc le COP s'en trouvent améliorés.

Un effet symétrique existe dans la phase de chauffage du réacteur (au cours de laquelle on ferme la vanne V15, on commence à faire circuler le fluide caloporteur à partir de la source chaude, on ouvre la vanne V8, on ferme la vanne V14, on ouvre la vanne V7 ... on ferme la vanne V9 et enfin on ouvre la vanne V2) : la température de sortie du fluide caloporteur est ici toujours inférieure à ce qu'elle est avec les dispositifs connus sans compartiments.

On précise que le clapet anti-retour V16 empêche le retour de vapeur du réacteur vers l'évaporateur dans cette deuxième partie du cycle (au cours de laquelle le réacteur est chauffé).

La commande du mouvement des pistons 14 et 16 et de l'ouverture et de la fermeture des vannes est de préférence une commande temporelle (qui est plus simple qu'une commande en fonction d'informations fournies par des capteurs de pression dans les compartiments et des capteurs de débit de fluide).

Le gestion en temps du cycle dépend du dimensionnement.

A titre purement indicatif et nullement limitatif, pour une durée de cycle total de 10 minutes, soit deux demi-cycles de 5 mn chacun, et pour une colonne de 1 m de long avec 10 compartiments de 10 cm de long chacun, le front de pression met environ 30 s pour passer d'un compartiment à l'autre et la durée entre l'ouverture de deux vannes est de 30 s.

Dans un autre mode de réalisation particulier, tous les moyens d'obturation V2 à V15 sont des clapets anti-retour et les clapets V1 et V16 peuvent être supprimés.

Pour décrire un cycle de régénération dans ce cas, on part, comme précédemment, de la fin de la régénération, lorsque la source froide est remplie de fluide caloporteur (froid) et que l'on s'apprête à inverser le sens de circulation du fluide caloporteur.

A ce moment, le réacteur est en communication via le fluide réfrigérant, par l'intermédiaire de tous ses compartiments, avec le condenseur (les clapets V2 à V8 sont ouverts et les clapets V9 à V15 sont fermés).

On commence à refroidir la colonne : le début de la colonne se refroidit et la pression dans le compartiment C1 baisse, ce qui provoque la fermeture du clapet V2 qui empêche tout transfert de vapeur du condenseur vers le réacteur.

En revanche, la baisse de pression dans le compartiment C1 provoque l'ouverture du clapet V9 dès que cette pression atteint la valeur de la pression souhaitée d'évaporation et l'évaporation commence.

Au fur et à mesure que le front froid progresse, les clapets situés du côté du condenseur se ferment et les clapets situés du côté de l'évaporateur s'ouvrent.

Lorsque tous les clapets de communication vers l'évaporateur sont ouverts et que tous les clapets de communication vers le condenseur sont fermés, on peut alors aborder un autre demi-cycle au cours duquel on va inverser le sens de circulation du fluide caloporteur.

On peut faire les mêmes considérations que précédemment pour aboutir au fait que, dans la phase de refroidissement du réacteur, la température de sortie du fluide caloporteur est supérieure à celle que l'on obtient avec des dispositifs connus.

On obtient encore un meilleur COP dans le cas présent.

Bien entendu, les clapets anti-retour sont convenablement choisis pour s'ouvrir et se fermer aux bons moments.

La seule commande porte, dans le cas de ce dispositif à clapets anti-retour, sur le temps de cycle.

Ce temps de cycle est déterminé à partir d'un critère de température.

Si Tmax et Tmin sont les températures respectives (connues) des sources chaude et froide, on arrête le demi-cycle de chauffage lorsque la température de sortie du fluide caloporteur Tsf est telle que

$$Tsf = (Tmax + Tmin)/2 - dT$$

Dans la phase de refroidissement, on arrête la circulation du fluide caloporteur pour inverser cette circulation dès que

$$Tsf = (Tmax + Tmin)/2 + dT$$

La quantité dT, inférieure à (Tmax + Tmin)/2, est fixée par l'homme du métier en faisant des simulations numériques du fonctionnement du dispositif.

Une solution raisonnable consiste à choisir dT égal à 0.

Bien entendu, la commande nécessite la connaissance de la température du fluide caloporteur du côté de la source chaude et du côté de la source froide : deux capteurs de température (non représentés) sont montés respectivement dans la canalisation aboutissant à la source chaude et dans celle qui aboutit à la source froide.

Sur la figure 3, on a représenté schématiquement un autre mode de réalisation particulier du dispositif objet de l'invention, qui diffère de celui qui est représenté sur la figure 1 par le fait que le réacteur 2 est associé non plus à deux canalisations mais à une seule canalisation 48 qui relie le condenseur 22 à l'évaporateur 24 et qui communique avec les compartiments C1 à C7 respectivement par l'intermédiaire des conduits 30.

Dans le cas de la figure 3, les moyens d'obturation sont constitués par un clapet anti-retour v1, des vannes v2 à v7 et un autre clapet anti-retour v8.

Le clapet v1 est monté à la sortie de l'évaporateur et le clapet v8 est monté à l'entrée du condenseur comme on le voit sur la figure 3.

Ceci empêche qu'une évaporation parasite se produise dans le condenseur 22 et que, symétriquement, une condensation parasite se produise dans l'évaporateur 24.

Les vannes v2 à v7 sont montées sur la canalisation 48, sur les tronçons de celle-ci qui sont compris entre les points où aboutissent les conduits 30, comme on le voit sur la figure 3.

On voit également sur la figure 3 des moyens 50 de commande des pistons 14 et 16 ainsi que des vannes v2 à v7.

Le cycle du fonctionnement du dispositif représenté sur la figure 3 comprend également deux parties :

- une partie au cours de laquelle on fait passer le fluide caloporteur de la source froide à la source chaude, par l'intermédiaire de l'échangeur 6, pour refroidir successivement les parties d'adsorbant contenues dans les compartiments, tout en faisant passer le fluide réfrigérant de l'évaporateur vers le réacteur, ce fluide réfrigérant se fixant successivement sur ces parties d'adsorbant,
- une autre partie au cours de laquelle on fait passer le fluide caloporteur de la source chaude à la source froide, par l'intermédiaire de l'échangeur 6, pour chauffer successivement les parties d'adsorbant qui sont respectivement contenues dans les compartiments, ce qui provoque la désorption du fluide réfrigérant contenu dans ces parties d'adsorbant, et on amène ce fluide réfrigérant désorbé au condenseur.

On considère encore un état initial dans lequel le fluide caloporteur se trouve dans la source froide et l'adsorbant contenu dans le réacteur 2 est chaud, sauf en l'extrémité du réacteur la plus proche de la source froide, et les vannes v2 à v7 sont à l'état ouvert.

Alors, on ferme la vanne v2 et on fait circuler le fluide caloporteur depuis la source froide.

Le clapet anti-retour v1 s'ouvre dès que la pression dans le compartiment C1 est inférieure à la pression souhaitée pour l'évaporation, ce qui établit la communication du compartiment C1 avec l'évaporateur 24.

Ensuite, on ferme la vanne v3 pour isoler le compartiment C2 puis on ouvre la vanne v2, ce qui met ce compartiment C2 en communication avec l'évaporateur, et ainsi de suite ....

A la fin de cette première partie du cycle de fonctionnement, les vannes v2 à v6 sont ouvertes et la vanne v7 est fermée.

On ouvre la vanne v7, ce qui met le compartiment C7 en communication avec l'évaporateur 24, le condenseur 22 étant isolé par le clapet v8.

On se trouve alors dans une situation où l'on peut inverser le sens de circulation du fluide caloporteur (et faire progresser le front de pression avec le front de température, en commandant convenablement les vannes).

On décrit ci-après divers modes de réalisation particuliers du dispositif objet de l'invention, comportant non plus un réacteur mais deux réacteurs, ce qui permet de produire du froid (et de la chaleur) de façon continue, alors que la production de froid (et de chaleur) avec un seul réacteur est discontinue (pendant la phase de chauffage du réacteur, la production de froid par la partie froide de ce réacteur est très faible et pendant la phase de refroidissement de ce réacteur, la production de chaleur par la partie chaude de ce réacteur est également très faible).

Plusieurs modes de réalisation particuliers d'un dispositif à deux réacteurs sont possibles.

On peut utiliser deux dispositifs par exemple du genre de celui de la figure 1 et comprenant chacun un seul réacteur, ces dispositifs étant montés en parallèle et fonctionnant avec un déphasage mutuel d'un demi-cycle.

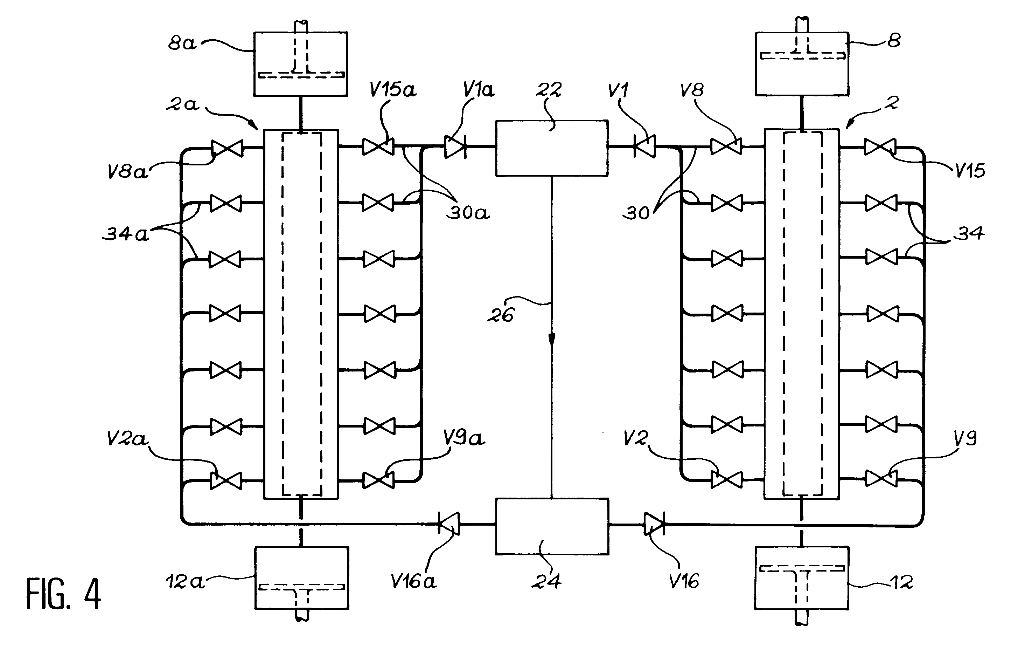

On a schématiquement représenté sur la figure 4 un autre dispositif qui est plus judicieux et qui utilise deux réacteurs ainsi qu'un seul évaporateur et un seul condenseur qui sont communs à ces deux réacteurs.

Plus précisément, on voit sur la figure 4 un dispositif à deux réacteurs, à savoir le réacteur 2 déjà décrit, qui est muni des vannes V2 à V15, des clapets anti-retour V1 et V16, de la source chaude 8, de la source froide 12, du condenseur 22 et de l'évaporateur 24.

On voit également, sur la figure 4, un deuxième réacteur 2a identique au réacteur 2 et muni de vannes V2a à V15a homologues des vannes V2 à V15, de clapets anti-retour V1a et V16a homologues des clapets V1 et V16, d'une source chaude 8a identique à la source chaude 8 et d'une source froide 12a identique à la source froide 12.

Comme on le voit sur la figure 4, le réacteur 2a utilise également le condenseur 22 et l'évaporateur 24 et des moyens de commande non représentés sont destinés à commander les vannes et les pistons des sources chaudes et froides de façon appropriée pour faire travailler les deux réacteurs en opposition de phase (lorsque le fluide caloporteur correspondant à l'un de ces réacteurs passe de la source froide à la source chaude, le fluide caloporteur correspondant à l'autre réacteur passe de la source chaude à la source froide et réciproquement).

Sur la figure 4, on n'a pas représenté l'ensemble des échangeurs de chaleur que l'on voit sur la figure 1, ces échangeurs de chaleur étant respectivement montés sur le condenseur, sur l'évaporateur et dans la source froide 12, un autre échangeur de chaleur non représenté étant également monté dans la source froide correspondante 12a.

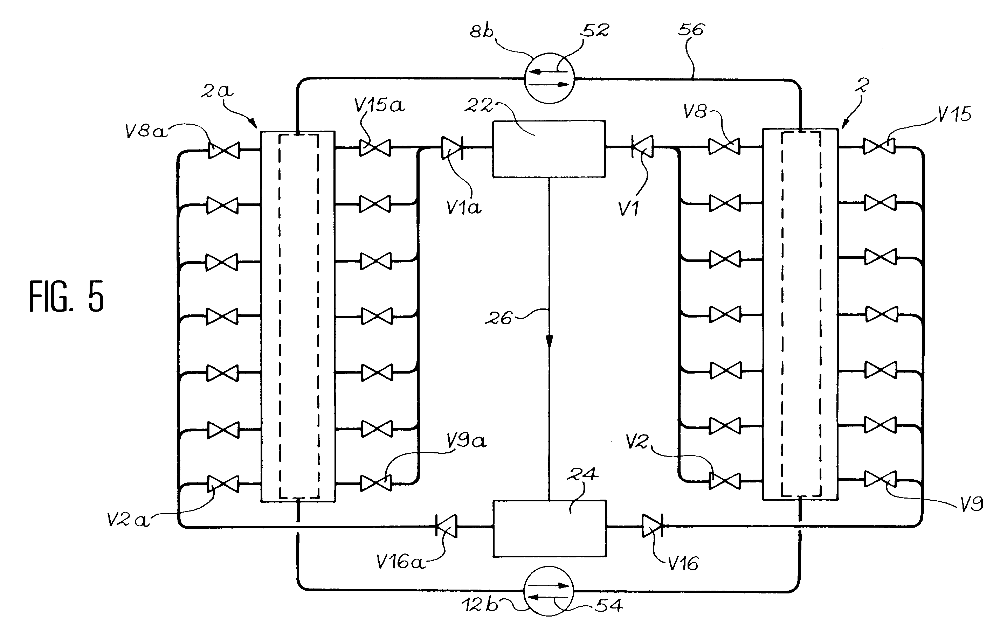

La figure 5 illustre schématiquement la possibilité d'utiliser une seule source chaude ainsi qu'une seule source froide pour les deux réacteurs.

Plus précisément, le dispositif conforme à l'invention qui est schématiquement représenté sur la figure 5 comprend les réacteurs 2 et 2a de la figure 4 avec le condenseur 22 et l'évaporateur 24 mais, dans le dispositif de la figure 5, les sources chaudes 8 et 8a et les sources 12 et 12a sont remplacées par une seule source chaude 8b et une seule source froide 12b respectivement munies de pompes réversibles symbolisées par les doubles flèches 52 et 54.

Comme on le voit sur la figure 5, on est ainsi capable d'établir, par l'intermédiaire d'une canalisation 56, un circuit fermé de fluide caloporteur entre les deux réacteurs via ces pompes réversibles.

Plus précisément, au cours d'un cycle de fonctionnement du dispositif schématiquement représenté sur la figure 5,

- dans une première partie de ce cycle, on envoie grâce à la pompe 5 ce fluide caloporteur de la source chaude 8b vers le réacteur 2a dont les vannes sont alors commandées de manière appropriée (les moyens de commande des pompes et des vannes ne sont pas représentés) tandis que le fluide caloporteur froid est envoyé à partir de la source froide 12b vers le réacteur 2 grâce à la pompe 54 activée dans le sens voulu, et
- dans la deuxième partie du cycle, on envoie le fluide caloporteur froid depuis la source froide 12b vers le réacteur 2a grâce à la pompe 54 dont le fonctionnement est alors inversé à cet effet tandis qu'on envoie le fluide caloporteur chaud depuis la source chaude 8b vers le réacteur 2 grâce à la pompe réversible 52 dont le fonctionnement est alors également inversé à cet effet.

Dans une variante de réalisation non représentée, les pompes 52 et 54 sont supprimées et la source chaude 8b est munie d'un piston apte à envoyer le fluide caloporteur chaud vers le réacteur 2a ou, au contraire, vers le réacteur 2b tandis que la source froide 12b est également munie d'un piston apte à envoyer le fluide caloporteur froid vers le réacteur 2a ou vers le réacteur 2.

Dans ces conditions,

- dans une première phase du cycle de fonctionnement du dispositif, le piston qui se trouve dans la source chaude fait circuler le fluide caloporteur chaud vers le réacteur 2a tandis que le piston contenu dans la source froide 12b fait circuler le fluide caloporteur 10 vers le réacteur 2, et
- dans la deuxième phase du cycle de fonctionnement on inverse le sens de déplacement de chacun des pistons lorsque ceux-ci arrivent en bout de course, ce qui inverse le sens de circulation du fluide caloporteur : le piston de la source chaude 8b pousse le fluide caloporteur chaud vers le réacteur 2 et le piston de la source froide 12b pousse le fluide caloporteur 10 vers le réacteur 2a.

Un tel mode de réalisation nécessite un volume de fluide caloporteur beaucoup plus important que le volume nécessité par le mode de réalisation utilisant deux pompes réversibles.

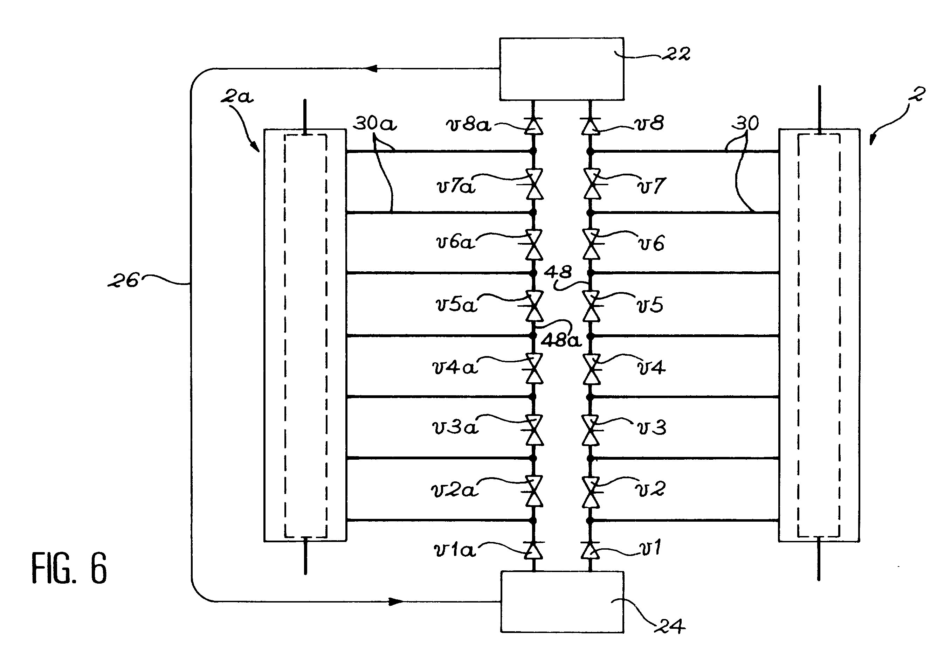

Le dispositif conforme à l'invention, qui est schématiquement et partiellement représenté sur la figure 6, utilise encore les deux réacteurs 2 et 2a ainsi que le condenseur 22 et l'évaporateur 24 qui sont alors communs à ces deux réacteurs.

Le réacteur 2 est connecté comme on l'a expliqué dans la description de la figure 3 : il est associé à la canalisation 48 qui relie le condenseur 22 à l'évaporateur 24, aux conduits 30, aux clapets anti-retour v1 et v8 et et aux vannes v2 à v7 comme on le voit sur la figure 6.

Comme on le voit également sur cette figure 6, le montage du réacteur 2a est identique : les compartiments (non représentés) de ce réacteur 2a sont connectés à une canalisation 48a par l'intermédiaire de conduits 30a (homologues des conduits 30) ; un clapet anti-retour v1a (homologue de v1) est monté sur la canalisation 48a à la sortie de l'évaporateur ; un clapet anti-retour v8a (homologue de v8) est monté sur la canalisation 48a à l'entrée du condenseur ; des vannes v2a à v7a sont montées sur la canalisation 48a, sur les tronçons de celle-ci qui sont compris entre les points où aboutissent les conduits 30a, comme on le voit sur la figure 6.

La ou les sources chaudes, la ou les sources froides et les moyens de commande des vannes et du mouvement du ou des fluides caloporteurs ne sont pas représentés sur cette figure 6.

Le fonctionnement du dispositif de la figure 6 est le suivant :

- dans une première partie du cycle de fonctionnement, on envoie le fluide caloporteur de la source chaude vers le réacteur 2a dont les vannes sont alors commandées de manière appropriée tandis que le fluide caloporteur froid est envoyé vers le réacteur 2, et
- dans la deuxième partie du cycle, on envoie le fluide caloporteur froid depuis la source froide vers le réacteur 2a tandis qu'on envoie le fluide caloporteur chaud vers le réacteur 2.

Le pilotage de la fin de chaque demi-cycle peut s'effectuer sur la phase de chauffage, soit suivant un critère temporel soit suivant le critère de température décrit plus haut.

Dans chaque réacteur, on peut avoir non pas un seul sorbant solide mais une pluralité de sorbants solides répartis suivant des critères thermodynamiques (par exemple un mélange de sorbants solides ou des sorbants solides qui différent d'un compartiment à l'autre).

On peut également utiliser non pas un fluide réfrigérant mais un mélange de fluides réfrigérants en association avec un réacteur (ou avec des réacteurs utilisant le même condenseur et le même évaporateur).

Les documents cités dans la présente description sont les suivants :

(1) FR-A-2465970 (CETIAT), Invention de J. Merigoux et F. Meunier

(2) EP-B-0124455 (CETIAT et CNRS), Invention de B. Brandon, A. Bailly et F. Meunier

(3) Demande de brevet français n°8517053 du 19 novembre 1985 au nom de JEUMONT-SCHNEIDER Société Anonyme.

(4) US-A-4,610,148 (SHELTON)

(5) US-A-4,694,659 (SHELTON)

(6) US-A-4,183,227 (BOUVIN et al.)

(7) Article de J. Jones, intitulé "Sorption refrigeration research at JPL/NASA", publié dans Solid sorption refrigeration proceedings of Paris Symposium, 18-20 Novembre 1992, p.126

(8) Article de D.J. Miles, D.M. Sanborn, G.A. Nowakowski et S.V. Shelton, intitulé "Gas fired sorption heat pump development", publié dans Solid sorption refrigeration proceedings of Paris Symposium, 18-20 Novembre 1992, p.74

(9) WO 91/15292 revendiquant la priorité de la demande de brevet français n°9004660 du 11 avril 1990

(10) N. Douss, F. Meunier et I.M. Sun, "Predictive model and experimental results for a two-adsorber solid adsorption heat pump", Ind. Ing. Chem. Res 27, 310-316 (1988)

## Revendications

1.  Dispositif de réfrigération et de chauffage comprenant :

    - au moins un réacteur (2, 2a) contenant au moins un sorbant solide (4) qui est capable de fixer au moins un fluide réfrigérant et qui est en contact avec un échangeur de chaleur (6),
    - au moins une source chaude (8, 8a, 8b) destinée à chauffer un fluide caloporteur,
    - au moins une source froide (12, 12a, 12b) destinée à refroidir ce fluide caloporteur,
    - des moyens (14, 16; 52, 54) de circulation alternative du fluide caloporteur entre la source chaude et la source froide, par l'intermédiaire de l'échangeur de chaleur,
    - au moins un condenseur (22) destiné à condenser le fluide réfrigérant libéré par le sorbant solide lorsque celui-ci est chauffé grâce au fluide caloporteur,
    - au moins un évaporateur (24) à plus basse pression que celle du condenseur, destiné à vaporiser le fluide réfrigérant pour que celui-ci se fixe au sorbant solide lorsque celui-ci est refroidi grâce au fluide caloporteur,
    - un moyen (26) de retour du fluide réfrigérant en phase liquide, du condenseur vers l'évaporateur, et
    - des moyens de circulation du fluide réfrigérant en phase gazeuse de l'évaporateur au réacteur puis de ce dernier au condenseur,

    ce dispositif étant caractérisé en ce que

    - le réacteur comporte une pluralité de compartiments (C1 à C7) séparés les uns des autres et parcourus successivement par le fluide caloporteur déplacé dans l'échangeur de chaleur, chaque compartiment contenant une partie du sorbant solide,
    - le sorbant solide est un matériau composite dont la conductivité thermique et la perméabilité sont plus faibles parallèlement au déplacement du fluide caloporteur (10) dans l'échangeur de chaleur (6) que perpendiculairement à ce déplacement,
    - les moyens de circulation de fluide réfrigérant comportent des moyens de communication successive (28,30,32,34,V1 à V16; 30,30a, 34,34a,V1 à V16, Via à V16a; 30,30a,48,48a, V1 à V8, Vla à V8a) des compartiments (C1 à C7) avec l'évaporateur et le condenseur dans le sens de déplacement du fluide caloporteur, pour ainsi créer, dans le réacteur, un front de température qui parcourt successivement les compartiments du premier au dernier de ceux-ci, et un front de pression qui parcourt successivement les compartiments avec le front de température.

2.  Dispositif selon la revendication 1, caractérisé en ce que les moyens de circulation du fluide réfrigérant comprennent :

    - au moins une canalisation (48, 48a) qui relie le condenseur (22) à l'évaporateur (24),
    - des conduits (30, 30a) qui relient respectivement les compartiments (C1 à C7) à cette canalisation (48, 48a), et

- des moyens (vl à v8; v1a à v8a) d'obturation
escamotables de la canalisation, qui sont aptes
à déplacer ledit front de pression dans le réacteur, d'un compartiment à l'autre.

3. Dispositif selon la revendication 1, caractérisé en
ce que les moyens de circulation du fluide réfrigérant comprennent :

- au moins une première canalisation (28) qui fait
communiquer le réacteur avec le condenseur
(22),
- un premier ensemble de conduits (30, 30a) qui
relient respectivement les compartiments (Ci à
C7) à cette première canalisation (28),
- au moins une deuxième canalisation (32) qui
fait communiquer le réacteur avec l'évaporateur (24),
- un deuxième ensemble de conduits (34, 34a)
qui relient respectivement les compartiments
(C1 à C7) à cette deuxième canalisation (32), et
- des moyens (V1 à V16; V1a à V16a) d'obturation escamotables des première et deuxième
canalisations et des premier et deuxième ensembles de conduits, qui sont aptes à déplacer
ledit front de pression dans le réacteur, d'un
compartiment à l'autre.

4. Dispositif selon l'une quelconque des revendications 2 et 3, caractérisé en ce que les moyens d'obturation comprennent des vannes.

5. Dispositif selon l'une quelconque des revendications 2 et 3, caractérisé en ce que les moyens d'obturation comprennent des clapets anti-retour.

6. Dispositif selon l'une quelconque des revendication
1 à 5, caractérisé en ce qu'il comprend deux réacteurs (2, 2a) et en ce que les moyens de circulation
de fluide caloporteur sont prévus pour faire circuler
un fluide caloporteur dans chaque réacteur, à partir
de la source chaude (8, 8a) vers la source froide
(12, 12a) de l'un de ces réacteurs et, simultanément, à partir de la source froide (12, 12a) vers la
source chaude (8, 8a) de l'autre réacteur.

7. Dispositif selon la revendication 6, caractérisé en
ce qu'il comprend une seule source chaude (8b),
une seule source froide (12b) et un seul fluide caloporteur, qui sont communs aux deux réacteurs (2,
2a).

8. Dispositif selon l'une quelconque des revendications 6 et 7, caractérisé en ce qu'il comprend un seul
condenseur (22), un seul évaporateur (24) et un
seul fluide réfrigérant, qui sont communs aux deux réacteurs (2, 2a).

9. Dispositif selon l'une quelconque des revendications 1 à 8, caractérisé en ce que les compartiments
(C1 à C7) sont séparés les uns des autres par des
cloisons (20) faites dudit sorbant solide.

**Patentansprüche**

1. Kühl- und Heizvorrichtung, die umfaßt:

- wenigstens einen Reaktor (2, 2a), der wenigstens ein festes Sorbtionsmittel (4) enthält, das
wenigstens ein Kühlfluid festhalten kann und
das mit einem Wärmetauscher (6) in Berührung
ist,

- wenigstens eine warme Quelle (8, 8a, 8b), die
ein Wärmeträgerfluid heizen soll,

- wenigstens eine kalte Quelle (12, 12a, 12b), die
dieses Wärmeträgerfluid kühlen soll,

- Einrichtungen (14, 16; 52, 54) zur abwechselnden Zirkulation des Wärmeträgerfluids zwischen der warmen Quelle und der kalten Quelle
mittels des Wärmetauschers,

- wenigstens einen Kondensatorkühler (22), der
das durch das feste Sorbtionsmittel freigesetzte Kühlfluid kondensieren soll, wenn dieses
Dank des Wärmeträgerfluids erwärmt wird,

- wenigstens einen Verdampfer (24) mit niedrigerem Druck als der des Kondensatorkühlers,
der das Kühlfluid verdampfen soll, damit sich
dieses an dem festen Sorbtionsmittel festlegt,
wenn dieses Dank des Wärmeträgerfluids gekühlt wird,

- eine Rückführeinrichtung (26) für das Kühlfluid
in Flüssigphase von dem Kondensatorkühler
zu dem Verdampfer, und Zirkulationseinrichtungen für das Kühlfluid in Gasphase von dem
Verdampfer zu dem Reaktor, dann von diesem
letzteren zu dem Kondensatorkühler, wobei
diese Vorrichtung **dadurch gekennzeichnet**
ist, daß

- der Reaktor eine Mehrzahl Abteile (C1 bis C7)
umfaßt, die voneinander getrennt sind und aufeinanderfolgend von dem Wärmeträgerfluid
durchlaufen werden, das in dem Wärmetauscher verschoben wird, wobei jedes Abteil einen Teil des festen Sorbtionsmittel enthält,

- das feste Sorbtionsmittel ein zusammengesetztes Material ist, dessen Wärmeleitfähigkeit und Durchlässigkeit parallel zu der Verschiebung des Wärmeträgerfluids (10) in dem Wärmetauscher (6) schwächer als senkrecht zu dieser Verschiebung sind,

- die Zirkulationseinrichtungen für das Kühlfluid aufeinanderfolgende Verbindungseinrichtungen (28, 30, 32, 34, V1 bis V 16; 30, 30a, 34, 34a, V1 bis V16, V1a bis V16a; 30, 30a, 48, 48a, V1 bis V8, V1a bis V8a) der Abteile (C1 bis C7) mit dem Verdampfer und dem Kondensatorkühler in der Verschiebungsrichtung des Wärmeträgerfluids umfaßt, um dadurch in dem Reaktor eine Temperaturfront zu erzeugen, die aufeinanderfolgend die Abteile von dem ersten bis zum letzten von ihnen durchläuft, und eine Druckfront, die aufeinanderfolgend die Abteile mit der Temperaturfront durchläuft.

2. Vorrichtung gemäß Anspruch 1, **dadurch gekennzeichnet,** daß die Zirkulationseinrichtungen für das Kühlfluid umfassen:

- wenigstens eine Röhrenleitung (48, 48a), die den Kondensatorkühler (22) mit dem Verdampfer (24) verbindet,

- Leitungen (30, 30a), die jeweils die Abteile (C1 bis C7) mit dieser Röhrenleitung (48, 48a) verbinden, und

- klappbare Sperreinrichtungen (V1 bis V8; V1a bis V8a) der Röhrenleitung, die die genannte Druckfront in dem Reaktor von einem Abteil zum anderen verschieben können.

3. Vorrichtung gemäß Anspruch 1, **dadurch gekennzeichnet,** daß die Zirkulationseinrichtungen für das Kühlfluid umfassen:

- wenigstens eine erste Röhrenleitung (28), die den Reaktor mit dem Kondensatorkühler (22) verbindet,

- eine erste Gruppe von Leitungen (30, 30a), die jeweils die Abteile (C1 bis C7) mit dieser ersten Röhrenleitung (28) verbinden,

- wenigstens eine zweite Röhrenleitung (32), die den Reaktor mit dem Verdampfer (24) verbindet,

- eine zweite Gruppe Leitungen (34, 34a), die jeweils die Abteile (C1 bis C7) mit dieser zweiten Röhrenleitung (32) verbinden, und

- klappbare Sperreinrichtungen (V1 bis V16; V1 a bis V16a) der ersten und zweiten Röhrenleitung und der ersten und zweiten Gruppe von Leitungen, die die genannte Druckfront in dem Reaktor von einem Abteil zu dem anderen verschieben können.

4. Vorrichtung gemäß irgendeinem der Ansprüche 2 und 3, **dadurch gekennzeichnet,** daß die Sperreinrichtungen Ventile umfassen.

5. Vorrichtung gemäß irgendeinem der Ansprüche 2 und 3, **dadurch gekennzeichnet,** daß die Sperreinrichtungen Rückschlagklappen umfassen.

6. Vorrichtung gemäß irgendeinem der Ansprüche 1 bis 5, **dadurch gekennzeichnet,** daß sie zwei Reaktoren (2, 2a) umfaßt und daß die Zirkulationseinrichtungen für das Wärmeträgerfluid vorgesehen sind, um ein Wärmeträgerfluid in jedem Reaktor von der warmen Quelle (8, 8a) zu der kalten Quelle (12, 12a) von einem der Reaktoren und gleichzeitig von der kalten Quelle (12, 12a) zu der warmen Quelle (8, 8a) des anderen Reaktors umlaufen zu lassen.

7. Vorrichtung gemäß Anspruch 6, **dadurch gekennzeichnet,** daß sie eine einzige warme Quelle (8b), eine einzige kalte Quelle (12b) und ein einziges Wärmeträgerfluid umfaßt, die zwei Reaktoren (2, 2a) gemeinsam sind.

8. Vorrichtung nach irgendeinem der Ansprüche 6 und 7, **dadurch gekennzeichnet,** daß sie einen einzigen Kondensatorkühler (42), einen einzigen Verdampfer (24) und ein einziges Kühlfluid umfaßt, die den beiden Reaktoren (2, 2a) gemeinsam sind.

9. Vorrichtung gemäß irgendeinem der Ansprüche 1 bis 8, **dadurch gekennzeichnet,** daß die Abteile (C1 bis C7) voneinander durch Trennwände (20) getrennt sind, die aus dem festen Sorbtionsmittel hergestellt sind.

**Claims**

1. Apparatus for refrigeration and heating comprising:

at least one reactor (2, 2a) containing at least one solid sorbent (4) able to fix at least one refrigerating fluid and which is in contact with a heat exchanger (6),
at least one hot source (8, 8a, 8b) for heating a heat transfer fluid and at least one cold source (12, 12a, 12b) for cooling said heat transfer fluid, means (14, 16; 52, 54) for the alternative circulation of the heat transfer fluid between the hot source and the cold source, by means of the heat exchanger,
at least one condenser (22) for condensing the refrigerating fluid released by the solid sorbent when the latter is heated as a result of the heat transfer fluid,
at least one evaporator (24) at a lower pressure than that of the condenser for vaporizing the refrigerating fluid so that the latter is fixed to the solid sorbent when it is cooled by means of the heat transfer fluid, a means (26) for returning the refrigerating fluid in the liquid phase from the condenser to the evaporator and
means for circulating the refrigerating fluid in the gaseous phase from the evaporator to the reaction and then from the latter to the condenser, said apparatus being characterized in that the reactor comprises a plurality of compartments (C1 to C7), which are separated from one another and successively traversed by the heat transfer fluid displaced in the heat exchanger, each compartment containing part of the solid sorbent,
the solid sorbent is a composite material, whose thermal conductivity and permeability are lower parallel to the displacement of the heat transfer fluid (10) in the heat exchanger (6) than perpendicular to said displacement, the cooling fluid circulation means comprise successive communication means (28, 30, 32, 34, V1 to V16, 30, 30a, 34, 34a, V1 to V16, V1a to V16a, 30, 30a, 48, 48a, V1 to V8, V1a to V8a) of the compartments (C1 to C7) with the evaporator and the condenser in the heat transfer fluid displacement direction, in order to in this way create in the reactor a temperature front which successively passes through the compartments from the first to the last compartment and a pressure front successively passing through the compartments with the temperature front.

2. Apparatus according to claim 1, characterized in that the refrigerating fluid circulating means comprise:

at least one duct (48, 48a) connecting the condenser (22) to the evaporator (24), pipes (30, 30a) respectively connecting the compartments (C1 to C7) to said duct (48, 48a) and retractable sealing means (v1 to v8; v1a to v8a) for the duct able to displace the pressure front in the reactor between individual compartments.

3. Apparatus according to claim 1, characterized in that the refrigerating fluid circulating means comprise:

at least one first duct (28) linking the reactor with the condenser (22), a first group of pipes (30, 30a) respectively connecting the compartments (C1 to C7) to said first duct (28), at least one second duct (32) linking the reactor with the evaporator (24), a second group of pipes (34, 34a) respectively connecting the compartments (C1 to C7) to said duct (32) and retractable sealing means (V1 to V16; V1a to V16a) for the first and second ducts and the first and second groups of pipes able to displace the said pressure front in the reactor between the individual compartments.

4. Apparatus according to either of the claims 2 and 3, characterized in that the sealing means comprise valves.

5. Apparatus according to either of the claims 2 and 3, characterized in that the sealing means comprise check valves.

6. Apparatus according to any one of the claims 1 to 5, characterized in that it comprises two reactors (2, 2a) and that heat transfer fluid circulating means are provided for circulating a heat transfer fluid in each reactor from the hot source (8, 8a) to the cold source (12, 12a) of one of said reactors and simultaneously from the cold source (12, 12a) to the hot source (8, 8a) of the other reactor.

7. Apparatus according to claim 6, characterized in that it comprises a single hot source (8b), a single cold source (12b) and a single heat transfer fluid, which are common to both reactors (2, 2a).

8. Apparatus according to either of the claims 6 and 7, characterized in that it comprises a single condenser (22), a single evaporator (24), and a single refrigerating fluid, which are common to both reactors (2, 2a).

9. Apparatus according to any one of the claims 1 to 8, characterized in that the compartments (C1 to C7) are separated from one another by partitions (20) made from the said solid sorbent.

FIG. 1

FIG. 2

FIG. 3

FIG. 4

8a

V15a

V1a

22

V1

V8

8

2a

V8a

30a

30

V15

34a

34

26

V2a

V9a

V2

V9

12a

V16a

24

V16

12

EP 0 622 593 B1

16

FIG. 5

FIG. 6

EP 0 622 593 B1